# EUROPEAN PATENT APPLICATION

(11) **EP 2 819 078 A1**
(43) Date of publication of application: **31.12.2014**
(21) Application number: 13305899.0
(22) Date of filing: 27.06.2013
(51) Int. Cl.: G06Q 20/32, G06F 21/12

(54) **Method, device and system for accessing a contact-less service**

(71) Applicant: Gemalto SA, 92190 Meudon (FR)
(72) Inventor: Zeamari, Ali, 13705 La Ciotat (FR); El-Marouani, Abdellah, 13705 La Ciotat (FR); Dubrois, Jacques, 13705 La Ciotat (FR); Fabre, Thierry, 13705 La Ciotat (FR)

(57) **Abstract**

The invention relates to a method 20 for accessing a contact-less service.

According to the invention, a device 14 accesses at least one contact-less application. The method comprises the following steps. The device determines 24 information relating to a location where the device is currently situated. The device retrieves at least one contact-less application 216 that is associated with the device location information and/or at least one contact-less application that is not associated with the device location information. And the device activates the at least one contact-less application that is associated with the device location information and/or the device deactivates the at least one contact-less application that is not associated with the device location information.

The invention also relates to corresponding device and system.

## Description

### Field of the invention:

The invention relates, in a general manner, to a method for accessing a contact-less service.

Furthermore, the invention also pertains to a device for accessing a contact-less service.

Finally, the invention relates to a system for accessing a contact-less service as well.

The present invention is notably applicable to a mobile device that may host one or several Secure Elements (SE), like an embedded chip, such as an embedded Universal Integrated Circuit Card (or eUICC), and/or a card, such as a Subscribed Identity Module (or SIM) type card or a Secure Memory Card (or SMC).

Within the present description, the term "service" refers notably to an application that is supported (or to be supported) by at least one entity, like either a user terminal that may cooperate with a token or a token, as standalone entity.

Within the present description, the adjective "contact-less" used within the expression "contact-less service" means notably that the service is accessible via a short range Radio-Frequency (or RF) link by using, for example, International Standardization Organization/ International Electro-technical Commission (or ISO/IEC) 14 443 specifications, a Ultra High Frequency Radio-Frequency IDentification (or UHF RFID) technology or the like.

### State of the art:

As known per se, a Near Field Communication (or NFC) enabled device allows its user to benefit from a contact-less service by using an NFC channel between the NFC enabled device and an external contact-less communicating device.

The NFC enabled device supports a so-termed contact-less application, like a transportation type application.

However, the contact-less application may be valid only if the device user is situated in a particular geographical place, like a town, a region and/or a country, where a domestic NFC infrastructure is present and may be reached from the NFC enabled device.

Thus, when the device user is moving from a place under the domestic NFC infrastructure range to an external place where no domestic NFC infrastructure is in range, the contact-less service is no more accessible and therefore usable.

The device user is unable to access the contact-less service since the contact-less application is not the right one to be used and that is valid for the external place.

The device user has to either (down)load a corresponding contact-less application or select a corresponding contact-less application by performing manual operations through the device user interface, when available. Such manual operations imply to know where the applicable contact-less application is available.

Thus, there is a need to facilitate an access to a contact-less application that is suitable where a device user is situated at the time or before she/he attempts to benefit from a corresponding contact-less service.

### Summary of the invention:

The invention proposes a solution for satisfying the just hereinabove specified need by providing a method for accessing a contact-less service.

According to the invention, a device accesses at least one contact-less application. The method comprises the following steps. The device determines information relating to a location where the device is currently situated. The device retrieves at least one contact-less application that is associated with the device location information and/or at least one contact-less application that is not associated with the device location information. And the device activates the at least one contact-less application that is associated with the device location information and/or the device deactivates the at least one contact-less application that is not associated with the device location information.

The principle of the invention consists in identifying a location where a device is present, activating one or several accessible contact-less applications that are associated with the identified location and/or de-activating one or several accessible contact-less applications that are not associated with the identified location.

Thus, the invention solution makes it possible to keep a contact-less application(s) that is(are) compliant with the current location and/or discard a contact-less application(s) that is(are) not compliant with the current location.

Accordingly, contrary to the second known solution that is described supra, the proposed solution does not require any manual intervention of a device user and is therefore user friendly.

According to a further aspect, the invention is a device for accessing a contact-less service.

According to the invention, a device comprises means for accessing at least one contact-less application. The device is adapted to determine information relating to a location where the device is currently situated. The device is adapted to retrieve at least one contact-less application that is associated with the device location information and/or at least one contact-less application that is not associated with the device location information. And the device is adapted to activate the at least one contact-less application that is associated with the device location information and/or deactivate the at least one contact-less application that is not associated with the device location information.

As to the device, it may be any kind of device that is able to communicate with a contact-less communicating device. It may be a user terminal or a token.

The terminal may be, for example, a mobile handset, a mobile (tele)phone, a smart phone, a Personal Digital Assistant (or PDA), an audio player, a video player, a media player, a game player, a portable Personal Computer (or PC), a laptop, a portable TeleVision (or TV) set, a tablet computer, a netbook and/or an electronic mobile equipment (e.g.: glasses, a watch).

According to still an additional aspect, the invention is a system for accessing a contact-less service.

According to the invention, the system comprises a device and at least one secure element. The at least one secure element is coupled to the device. The device or at least one secure element comprising at least one contact-less application, one of the at least one secure element is adapted to determine information relating to a location where the device is currently situated. One of the at least one secure element is adapted to retrieve at least one contact-less application that is associated with the device location information and/or at least one contact-less application that is not associated with the device location information. And one of the at least one secure element is adapted to activate the at least one contact-less application that is associated with the device location information and/or deactivate the at least one contact-less application that is not associated with the device location information.

Within the present description, a secure element or termed token is a smart electronic object that is intended to communicate with the outside world.

The invention does not impose any constraint as to a kind of the token(s).

The token(s) may be fixed to and/or removable from a host device.

As removable token, it may be a smart card, like a SIM type card, a Secure Removable Module (or SRM), a smart dongle of the USB (acronym for "Universal Serial Bus") type, a (possibly micro) Secure Digital (or SD) type card or a Multi-Media type Card (or MMC), or any format card to be coupled to a host device.

### Brief description of the drawings:

Additional features and advantages of the invention will be more clearly understandable after reading a detailed description of one preferred embodiment of the invention, given as one indicative and non-limitative example, in conjunction with the following drawings:
   - Figure 1 represents a simplified diagram of one exemplary embodiment of an NFC enabled mobile phone, as a user terminal, coupled to a token, as a device for accessing a contact-less service that is adapted to select automatically a location compliant contact-less application(s), according to the invention; and
   - Figure 2 illustrates a simplified message flow of one exemplary embodiment of a method implemented notably by the different entities of the figure 1, so that the token supports, after its(their) possible importation(s), a location compliant contact-less application(s).

### Detailed description:

Herein under is considered a case in which the invention method for accessing a contact-less service is implemented by, among others, a smart card, as token, in cooperation with an NFC enabled mobile terminal and an NFC chip connected to an antenna under a token control.

However, the invention method for accessing a contact-less service may be implemented by an NFC enabled mobile terminal and an NFC chip connected to an antenna under a terminal control. In other words, the NFC enabled mobile terminal, does not cooperate with any token, apart from the NFC chip. According to such an embodiment (not represented), the NFC enabled mobile terminal, as device for accessing a contact-less service, is adapted, so as to exert, on its own, the functions that are carried out by the token and the terminal and that are described herein below.

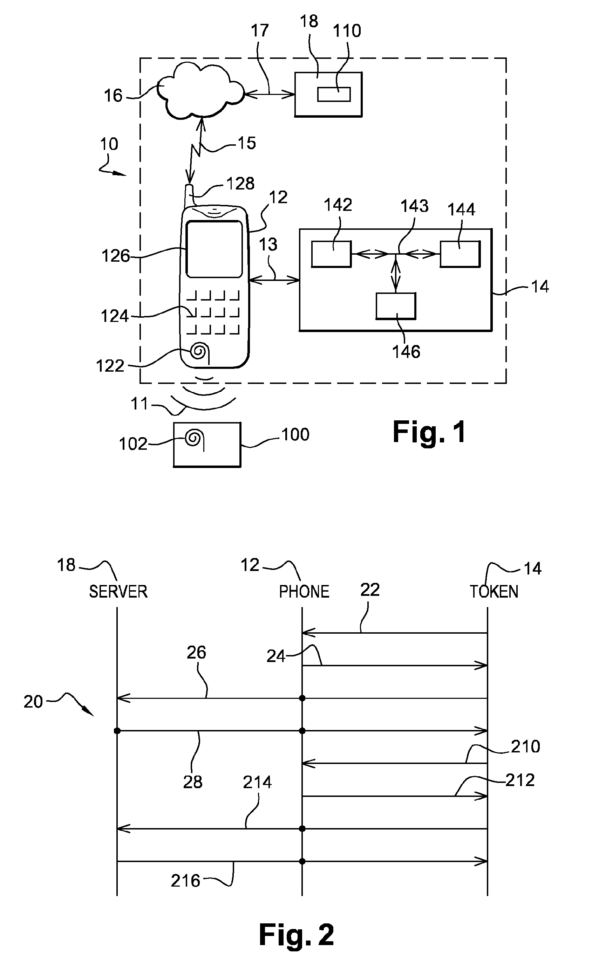

**Figure 1** shows one embodiment of an electronic system 10 for accessing a Contact-Less (or CL) service and a CL (communicating) device 100.

The CL device 100 may be a Radio Frequency IDentification (or RFID) tag to be read, a CL reader or the like.

The CL device 100 may be connected or not connected to a communication network, as a backend system (not represented) and an NFC infrastructure that is herein termed domestic NFC infrastructure.

The CL device 100 includes at least one antenna 102 for communicating, over a short range Radio Frequency (or RF) link 11, with an NFC enabled phone 12, as user terminal.

The antenna 102 is able to receive data from and send data to outside, through the bi-directional short range RF link 11.

The CL device 100 may be located near to or on a medium on which information relating to an access to a CL service may be published. The medium publishes information accessible by any CL communicating device user that is present in front of the medium and the CL device 100.

The CL device 100 is present at a geographical location at which one or several CL services may be accessed.

The CL service(s) may be any type of service. The CL service(s) may include an e-government type service(s), a banking/finance type service(s), a mobile communication type service(s), a loyalty type service(s), a ticketing type service(s), a transportation type service(s), a payment type service(s) and/or an information type service(s).

The system 10 for accessing a CL service includes an NFC enabled mobile phone 12, as user device, and an eUICC or a SIM type smart card 14 that is coupled to the NFC enabled mobile phone 12.

The system 10 for accessing a CL service may further include a so-termed Over-The-Air (or OTA) or Over-The-Internet (or OTI) server 18, as remote server.

For a sake of clarity, the NFC enabled mobile phone 12, the eUICC or the SIM type smart card 14, and the OTA or OTI server 18 are termed herein after the phone 12, the token 14 and the server 18 respectively.

As to the phone 12, it may be any device including means for processing data, comprising or being connected to a first antenna 122 for sending to and/or receiving data from outside, through a short range RF link 11, comprising or being connected to means for interfacing with a user, as Man Machine Interface (or MMI), like a keyboard 124, a loudspeaker (not represented) and/or a display screen 126, comprising or being connected to means for storing data, and comprising or being connected to a second antenna 128 for sending to and/or receiving data from outside, through a long range RF link 15.

The first antenna 122 allows exchanging, via an NFC chip (not represented), through a short range RF link 11, with an external CL entity(ies) data transported by a short-range RF signal.

The frequency of the short range RF link 11 may be fixed at, for example, 13,56 MHz.

The NFC chip includes, in particular, a microprocessor(s) (not represented), as means for processing data, one memory(ies) (not represented), as means for storing data, and at least one Input/Output (or I/O) interface (not represented) for exchanging data with the outside world, which are internally linked together through a data and control bus (not represented).

The NFC chip, or termed Contact-Less Front end (or CLF) chip, is incorporated within the phone 12.

According to an alternative embodiment (not represented), the NFC chip is incorporated within a token that is coupled to the phone 12 and interacts with the phone 12.

The NFC chip is soldered on a Printed Circuit Board (or PCB) of the phone 12. The NFC chip is connected to, on the one hand, the first antenna 122 configured to exchange data, through a short range RF signal, with an external CL communicating device, and, on the other hand, the phone microprocessor.

The NFC chip is connected either directly or, through a phone I/O interface, to the token 14.

The NFC chip plays a role of a modulator-demodulator (or modem) for the token 14, i.e. a device that:
- demodulates a received analogical carrier signal to decode encoded digital information that is received, over the first antenna 122, from an external CL entity and to be transmitted to the token 14, and
- modulates an analogical carrier signal to encode digital information received from the token 14 and to be transmitted, over the first antenna 122, to an external CL entity.

The NFC chip is adapted to control a powering of at least one token 14 chip.

In a reader mode, i.e. when the phone 12 battery powers an external CL device 100, the NFC chip receives power from the phone 12 battery and powers the CL device by broadcasting a short range RF signal. The token 14 chip and the electronic components of the phone 12 are powered by the phone 12 battery.

In a card emulation mode (or transponder mode), i.e. when the token 14 is powered at least in part by an external CL device 100, the NFC chip receives power from the CL device 100 and provides power to the token 14 chip and the phone 12 components. The token 14 is thus powered even if the phone battery is off.

In both modes, namely in the reader mode and in the card emulation mode, the NFC chip communicates with a token 14 chip, as its single interlocutor.

The NFC chip and the token 14 chip may exchange data by implementing a protocol of the Single Wire Protocol (or SWP) type, as low level protocol.

The NFC chip exchanges with the token 14 chip by implementing a protocol of the Host Controller Interface (or HCl) type, as high level protocol, i.e. a protocol used for exchanging from an application run by the NFC chip microprocessor (not represented) to an application run by a token microprocessor 142.

The phone 12 includes at least one battery (not represented), at least one microprocessor (not represented), at least one memory (not represented) and at least two I/O interfaces.

The phone memory stores data, like user data, and at least one application.

As application(s), there is preferably at least one menu or a Web browser, as user interface for accessing at least one application supported by the token 14. A token application allows exchanging data between the CL device 100, the token 14, and possibly the server 18 and the phone user, in order to select automatically one or several CL applications.

The phone microprocessor processes data originating from either the phone memory or an external entity. The phone microprocessor executes at least one application, so as to interact with an application(s) that is(are) supported by the token 14 and offered to the token user.

The phone 12 may be used for letting communicate, through the NFC chip, the token 14 and the CL device 100.

The phone 12 comprises a second antenna 128 for exchanging data, through a long range RF link 15, with a mobile radio-communication network 16.

The mobile radio-communication network 16 may be constituted by a Global Service for Mobiles (or GSM), a Universal Mobile Telecommunications System (or UMTS), a Code Division Multiple Access (or CDMA) and/or a Long Term Evolution (or LTE) type network(s).

The mobile radio-communication network list that is just herein above indicated is not exhaustive but only for exemplifying purposes.

The phone I/O interfaces includes, among others, one I/O interface, so as to exchange data with the token 14. The interface with the token 14 may be an International Standard Organization (or ISO) 7816 interface, as a contact interface when the token 14 is accommodated within a phone 12 housing.

The phone 12 housing may have one or several slots to receive, each, a removable card that may be smart.

The phone I/O interfaces may include one or several I/O interfaces, so as to exchange data with one or several other tokens (not represented).

The phone 12 is connected, through a bi-directional contact or CL link 13, to the token 14.

The token 14 belongs to a user, namely the phone user, as terminal user.

The token 14 is a smart object that is intended to communicate with the outside world. The token 14 is any electronic medium that may have different form factors.

For example, instead of a SIM type smart card, such as a UICC, the token may be embodied within a (micro) Secure Digital (or SD) type card, a Multi-Media type Card (or MMC), a smart dongle of the USB (acronym for "Universal Serial Bus") type, or a chip to be fixed or soldered to a user terminal, as host device, possibly in a removable manner.

When there are several tokens that are coupled to the phone 12, the token 14 is adapted to act as a token master, that controls, possibly through the NFC chip, the other token(s), as slave(s).

The token 14 comprises a chip.

The token chip preferably includes at least one microprocessor 142, as data processing means, at least one memory 144 and at least one I/O interface 146 which are internally linked together through a data and control bus 143.

The token 14 may include an ISO 7816 interface, so as to let communicate, through the contact link 13, the token 14 and the phone 12. The communication between the token 14 and the phone 12 is used in particular to benefit from the MMI of the phone 12.

The token user may have subscribed to a service(s) managed by the token 14 and related notably to one or several applications supported by the token 14.

Amongst the supported application(s), there is at least one CL application.

The application run by the token microprocessor 142 may be written in an object-oriented language, such as Java or Javacard, also termed applet when developed in Java.

An execution of the supported CL application(s) may be triggered either automatically by an identifier that is transmitted from the CL device 100 and/or a user selection of the application within either a menu, like a Sim ToolKit (or STK) menu or a browser, or a server that is embedded within the token 14. The embedded menu, browser or the server lists a part of or all the applications supported by the token 14.

The token microprocessor 142 is able to initiate actions, in order to interact directly with the outside world, in an independent manner of the phone 12, as host device. Such a capacity of interaction at the initiative of the token 14 is also known as proactive capacity. The token 14 is thus enable to send, at its own initiative, to the phone 12 a proactive command, also known as "Display text", for displaying, through the phone display screen 126, some message and/or another command for requesting a user input, through the phone 12 MMI.

The token microprocessor 142 preferably executes security functions, in order to protect an access to user information stored and managed through or by the token 14.

The security functions include preferably a user authentication process to be used before accessing executable and non-executable data stored within the token memory 144.

To authenticate the user, the token 14 may store an application for verifying data, such as a Personal Identity Number (or PIN) and/or a biometric print(s) (like a fingerprint(s), a facial print(s) and/or a iris print(s)), securely stored within the token memory 144 and to be input by the token user.

Thus, the token 14 is able to compare data input by the token user with stored data and authorize, when successfully verified, a running of any application supported by the token 14.

The security functions include preferentially an encryption/decryption process to be used before sending data, so as to protect an access to data exchanged between the token 14 and the CL device 100 and/or the token 14 and a remote server 18. The server 18 is accessible through the mobile radio-communication network 16 and/or through a communication network (not represented), like Internet or an Intranet, over an Access Point (or AP), like a Wifi hotspot.

Preferably, the token 14 stores securely, within its memory 144, an International Mobile Subscriber Identity (or IMSI), as a unique number associated with all GSM, UMTS, CDMA and/or LTE type network(s) phone users.

The IMSI is used for identifying the token user as a subscriber in relation to one or several mobile radio-communication networks.

To identify the token user, the token memory 144 may store, for example, a SIM application for a GSM network, a Universal Subscriber Identity Module (or USIM) for a UMTS network, a CDMA Subscriber Identity module (or CSIM) for a CDMA network, a Removable User Identity Module (or RUIM) for GSM, UMTS and CDMA networks and/or an Internet protocol multimedia Services Identity Module (or ISIM) for IP Multimedia Subsystem (or IMS).

The token memory 144 includes a non-volatile memory(ies) and/or a volatile memory(ies).

The token memory 144 may be constituted by one or several EEPROM (for "Electrically Erasable Programmable Read-Only Memory"), one or several ROM (for "Read Only Memory"), one or several Flash memories, and/or any other memory(ies) of different types, like one or several RAM (for "Random Access Memory").

The token memory 144 stores an application for accessing a location compliant CL service(s).

The token memory 144 stores data relating to one or several CL applications.

The token 14 is able to determine information relating to a location where the token 14 is presently situated.

The information relating to a location may be more or less precise.

To determine the token 14 location, the token 14 detects by itself, i.e. without the help of its host device, where the token 14 is.

Alternately, the token 14 gets preferably from the phone 12, as host device, information relating to a location at which the phone 12 is placed. The token 14 may interrogate regularly, e.g. every minute, the phone 12 about a current Global Positioning System (or GPS) type location or a LOCation Information (or LOCI) that the phone 12 retrieves from a mobile radio-communication network entity 16, like a Home Location Register (or HLR) (not represented) or the like.

As known per se, the HLR stores, within a central database (not represented), data relating to subscribers that are authorized to use a home network (not represented). The HLR records, e.g. a set of IMSIs, as identifiers relating to subscriber devices. Each IMSI is associated with a Mobile Subscriber Integrated Digital network-Number (or MSISDN) that allows to route or connect data to the phone 12, as token hosting terminal. A Visitor Location Register (or VLR) (not represented) is able to inform the HLR that a token, as subscriber device, has arrived into the area covered by the VLR. The VLR includes a database of the subscribers who have roamed to the area that a Mobile Switching Centre (or MSC) (not represented) serves and manages. The MSC may interrogate the VLR to determine where the subscribers are located. Each base station (not represented) relating to the home network is served by the VLR. The subscriber device may be any kind of device that may be managed by an operator of the home network. The subscriber device has to store at least one identifier relating to the subscriber and user of the device, like an IMSI, or other cooperating device data, like a MSISDN, that allows a home network entity(ies) to retrieve subscriber identification data.

Instead of the HLR relating to a UMTS network, a Home Subscriber Server (or HSS) relating to the LTE network provides the phone 12 with a LOCI.

Alternatively, to determine or assess the current token location, the token 14 may survey an occurrence of an event, like
- a reception, by the phone 12, of a welcome Short Message Service (or SMS) type message, as roaming message,
- a reception, by the phone 12, of a message informing about a town or a region which the phone 12 enters into,
- a detection of a change of an RF network, such as a data communication switch, by the phone 12, from a long range RF network, like a mobile radio-communication network, to a short range RF network, like a Wifi type network or a private Wifi network; and/or
- a detection of a presence of a short range RF network, like a Wifi type network through a hotspot, that is received by the phone 12, as token hosting terminal.

The token memory 144 stores preferably data relating to the concerned user, as user data. The user data may include a first name, a last name, a birth date, a personal picture, a user identifier, a mail address of the user, a telephone number of the user, an email address of the user, a Session Initiation Protocol (or SIP) address of the user, a telecopy number of the user, a key Ki associated with the user identifier, like the IMSI, a PIN, a biometrics print(s) and/or other appropriate data.

The key Ki is shared with the server 18. The key Ki may be used as an encryption key for encrypting data to be sent to the server 18 with a predetermined encryption algorithm, like a Milenage type algorithm.

Some data item(s), like predetermined user data and/or data relating to an access to one or several CL services, stored within the token memory 144 may be used for being transmitted to the CL device 100.

According to an important invention feature, the token 14 is adapted to know whether the token 14 or another token coupled to the phone 12 does or does not support one or several CL applications that are compliant or associated with the token location.

Only if the token 14 or another token coupled to the phone 12 supports one or several location compliant CL applications, then the token 14 retrieves and activates or lets activate the location compliant CL application(s), if it(they) is(are) not already activated.

Likewise, the token 14 is adapted to know whether the token 14 or another token coupled to the phone 12 does or does not support one or several CL applications that are not compliant or associated with the token location.

Only if the token 14 or another token coupled to the phone 12 supports one or several location non-compliant CL applications, then the token 14 retrieves and deactivates or lets deactivate the CL application(s) that is(are) not compliant with the token location, if it(they) is(are) not already deactivated.

Instead of a mere CL application deactivation, it may be a lock and/or a deletion of the concerned CL application(s).

The token 14 may store data relating to a location and data relating to one or several CL applications that are associated with the location, for a set of different locations, like e.g. a lookup table. When there is a plurality of CL applications associated with one and the same location, the token 14 may classify them according to a priority order based upon one or several predefined criterions. As predefined criterions, it may be a decreasing security level, a decreasing service quality level and/or a predetermined service provider order. The token 14 creates thus an ordered list of location compliant CL applications.

Several CL applications may have several common data, like Mifare Classic, Mifare for Mobile. For example, a unique instance of an object CL application is to be selected at a given time while one or several variants of the CL application remain present on the same client device, like the token 14.

A CL application may be organized in a hierarchical structure in which there are a root, one or several Data Files (or DF) and/or Elementary Files (or EF).

The token 14 has to support and activate at least one location compliant CL application, after its possible downloading from the server 18. To download one or several location compliant CL applications, the token 14 may have to transmit to the server 18 a request based upon token location information and/or a corresponding application identifier set or (ordered) list that is(are) submitted from the token 14 to the server 18.

If the token 14 does not retrieve, at the token 14 side, i.e. stored within either the token memory 144 or any other token that is coupled to the phone 12, any location compliant CL application, then the token 14 may be adapted to configure automatically at least one CL application that may have to be previously downloaded by updating, i.e. adding, modifying and/or deleting, one or several features relating to a CL application that is supported at the token side. The update of the CL application feature(s) may relate to information relating to a corresponding service, like a server identifier, and/or a security feature(s), like an application PIN and/or an application key(s) to be used.

If the token 14 does support a plurality of location compliant CL applications that are not compatible with each other, then the token 14 is preferably adapted to select automatically, amongst the non-compatible location compliant CL applications, only one CL application based upon data, like a security feature(s), that is(are) (or not) shared between the non-compatible location compliant CL applications, an RF parameter(s), and/or other selection criterion(s).

As a security feature(s), it may include a CL application PIN and/or a CL application key(s).

As an RF parameter(s), it may include a protocol ISO 14 443 type A or B.

The server 18 is identified preferably either within the data retrieved from the CL device 100 or by data stored within the token memory 144.

The server 18, as addressee of information to be sent over the token 14, may be identified by a Uniform Resource Identifier (or URI), like an Uniform Resource Locator (or URL), a call phone number of a server, a video-conference call phone number of a server, an Internet address and/or an email address of a server relating to a service provider, as server identifier(s).

The server 18 is connected, through a bi-directional wire link 17, to the mobile radio-communication network 16 and/or a communication network, like Internet (not represented).

The server 18 is hosted by a computer.

The server 18 is preferably dedicated to running an application for managing a database and communicating some information of the database to outside.

The server 18 includes or is connected to a memory 110 storing the database.

The database contains a plurality of data that relates to several CL applications. The CL application data includes preferably, for each CL application, a CL application identifier, like an Application IDentifier (or AID), and corresponding executable data.

The database stores preferably, for each subscriber device, one or several CL applications that are supported by the concerned subscriber device, like the token 14. The subscriber may be identified by an IMSI, a MSISDN and/or any other Unique IDentifier (or UID).

The server 18 is preferably adapted to associate, with data relating to a location, data relating to one or several CL applications that are compliant with the considered location.

The server 18 may store data relating to a location and data relating to one or several CL applications that are associated with the location, for a set of different locations, like e.g. a lookup table.

The data relating to a location is preferably to be provided from an external client device, like a user terminal and/or a token 14.

The server 18 is preferably adapted to issue data relating to one or several CL applications that are associated with a location submitted from an external client device.

The server 18 may be further adapted to remotely personalize a CL application supported by a client device, so as to create or generate, at the client device side, a CL application based upon the already supported CL application and personalized data that is provided by the server 18.

The server 18 manages the database.

The server 18 may store or access data relating to a private key relating to the server 18, data relating to a public key associated with the private key, and/or data relating to a shared key relating to an external entity, such as a token 14.

The public key relating to the server 18 may be shared, possibly by the server 18 or through another server (not represented) connected to the server 18, between the token 14 (and/or the phone 12) and the server 18. The external entity is thus able to exchange data, in an encrypted manner, with the server 18.

The server 18 acts as a server managing the database comprising one or several CL applications that are associated, each, with a location information to be occupied by a client device.

The server 18 may obtain from different service providers for numerous locations one or several associated CL applications of different types of services (e.g. transport, payment, loyalty and so on).

The server 18 may be operated by either a mobile radio-communication network operator or on its behalf, a bank operator and/or a service provider or on its behalf. As service provider, it may also be a company, as a transport operator, that manages a transport service, like a bus, a train, a plane and/or a loyalty service.

The server 18, or another server connected to the server 18, is able to decrypt encrypted data received from the token 14 by using a decryption key depending on the shared key Ki and a predetermined decryption algorithm.

The server 18 may be arranged to analyze whether each user, thanks to a corresponding identifier(s), like an IMSI, a MSISDN and/or UID, that is received from the token 14 and/or the phone 12 does or does not authorize the requesting user to access the managed CL service(s) to be issued.

The server 18 may be able to remotely activate and/or deactivate a CL application(s) that is(are) supported by the client device, like a token 14.

The server 18 accesses rules for accessing the database to be satisfied by the user.

The rules for accessing the service may encompass a user profile(s) that is(are) eligible for accessing the service, such as a predetermined minimum age, a predefined gender and/or other kind of access condition(s).

The rules for accessing the service may include other condition(s), like a CL application is only associated with information relating to a single location, i.e. the concerned CL application is forbidden when roaming to a current new location area and is to be deactivated/locked or automatically when the current new location area is detected. As another condition, a CL application is associated with information relating to a location while being used in a restricted manner, i.e. the concerned CL application is restricted in its use, like a payment type service is to be used while requiring a user PIN, when roaming to a current new location area and is to be conditioned by an occurrence of a predetermined event, like a SMS type welcome message, when the new location area is detected.

The rules for accessing the service are taken into account, so as to forbid or authorize an access to the concerned CL service(s) to be downloaded.

**Figure 2** depicts an example of a message flow 20 that involves the phone 12, the token 14 and the server 18.

It is assumed that the token 14 user moves from an original town to a target town where a target CL application that is associated with the target town is only applicable and separate from an original CL application that is associated with only the original town. The original CL application, as first CL application, and the target CL application, as second CL application, are both location dependent, namely the first location and the second location respectively. The first and second CL applications may relate to a payment type CL service.

It is further assumed that the token memory 144 stores a first CL application, as original CL application, that is associated with a first location, as original location. Only the first CL application that is compliant with the first location is active on the token 14.

Optionally, before executing an application for accessing a location compliant CL service(s) that is(are) supported by the token 14, the token 14 checks whether the phone user is the true user. To authenticate the token user, the token 14 verifies that data, such as a PIN, entered by the user does or does not match expected data stored within the token memory 144.

Only if the token 14 has successfully authenticated the token user, then the token 14 triggers an execution of the application for accessing a location compliant CL service(s). Otherwise, i.e. if the user is not authenticated by the token 14, the token 14 forbids to run the application for accessing a location compliant CL service.

The token user carrying the phone 12 leaves the original town and enters the target town.

Optionally, the token 14 sends to the phone 12 a request 22, like "Provide LOCI", for getting a LOCation Information (or LOCI).

The phone 12 sends to the token 14 a message 24 including a LOCI relating to the target town, as possible request response.

Alternately, the phone 12 is pre-configured to inform automatically the token 14 as soon as the phone 12 goes away from an original town about the determined location information. In such a case, the token 14 does not need to send to the phone 12 any LOCI getting request.

According to an alternative (not represented), the token 14 reads an RFID tag, so as to get a location information.

The token 14 knows to be newly located within the target town, as second location.

The token 14 retrieves that the second CL application is associated with the second location.

The token 14 verifies preferably whether the second CL application that is associated with the second application is or is not compatible with the first CL application that is associated with the first CL application.

Only if the second CL application is not compatible with the first CL application, the token 14 deactivates the first CL application, so as not to have two or more incompatible CL applications active at the same time. The token 14 may be able to select, amongst the incompatible CL applications, only one CL application based upon one or several predefined criterions, like an RF parameter(s), shared data, a shared resource(s) and/or other data. Otherwise, i.e. if the second CL application is compatible with the first CL application, the token 14 does not deactivate the first CL application and may have several CL applications active, once activated, at the same time.

Optionally, if the token 14 does not support the second CL application, then the token 14 sends, through the phone 12, to the server 18 a message 26 including, on the one hand, a request for downloading a set of one or several CL application identifiers that are associated with the second location, and, on the other hand, the second location.

The server 18 retrieves data, like AIDs, relating to one or several CL applications that are associated with the provided second location.

The server 18 sends back, through the phone 12, to the token 14 a message 28, as request response, including data relating to one or several CL applications, like AIDs, as a set of one or several CL application identifiers, that are associated with the second location.

The messages 26 and 28 exchanged between the phone 12 and the server 18 may be encrypted thanks to an encryption key that is shared between the token 14 and the server 18.

Optionally, the token 14 sends to the phone 12 a message 210, like "please enter your PIN to download a second CL application(s)", as user request, for prompting the phone user to give her/his approval, so as to validate a CL application downloading. Such a user validation allows downloading one or several corresponding CL applications that are associated with the second location.

The phone 12 displays on its display screen 126 the user prompting message. The phone user enters, through the phone keyboard 124, a PIN.

The phone 12 sends back to the token 14 a message 212, as user response, including the entered PIN.

Then, the token 14 compares the entered PIN with an expected PIN that is securely stored within the token memory 144.

Only if the entered PIN does match the expected PIN, the token 14 authorizes to download data relating to a second CL application that is associated with the second location. Otherwise, i.e. if the entered PIN does not match the expected PIN, the token 14 forbids to download data relating to a second CL application that is associated with the second location.

After a possible user approval, the token 14 sends, through the phone 12, to the server 18 a message 214 including a request for downloading the second application and/or a request for personalizing the second application along with a second application identifier, like AID.

Once the server 18 has retrieved the second application data and/or personalization data, the server 18 sends, through the phone 12, to the token 14 a message 216 including data relating to the second application and/or data relating to a personalization of the second application.

The last message 216 may further include a script for activating the just downloaded and/or personalized second application.

The messages 214 and 216 exchanged between the phone 12 and the server 18 may be encrypted thanks to an encryption key that is shared between the token 14 and the server 18.

The token 14 may configure automatically the second CL application that is associated with the second application that is to be activated. Such a CL application configuration may be by defining at least one CL application feature, such as a security feature(s), like a user PIN request when an amount value exceeds 20 euros or dollars.

Once the token 14 has installed a second CL application or personalised another supported CL application, the token 14 activates the second CL application that is associated with the second location, as current new location of the token 14.

The second CL application that is compliant with the second location is active on the token 14. The first CL application that is compliant with the first location may also be active simultaneously if the first and second CL applications are compatible.

The invention solution allows updating a client device, like the token 14, while taking into account a current new location (area), so as to keep active at least one CL application that is associated with the current new location (area), by possibly activating and/or deactivating one or several location compliant or non-compliant CL applications.

The invention solution is user friendly since the user is not involved, except for giving her/his approval depending on the required security level.

The invention solution is simple and therefore cheap to implement.

The invention solution is compatible, at least for one embodiment, with notably the existing mobile network infrastructures and the existing exchanged messages between the network entities, so as to find e.g. a LOCI, as location information.

The invention solution offers a continuity of service for the client device/system, like a token, as standalone entity, or a mobile system including a mobile user terminal and one or several tokens.

The embodiments that have just been described are not intended to limit the scope of the concerned invention. Other embodiments may be given. As another embodiment example, instead of getting indirectly location information from a mobile radio-communication network entity, like an HLR, the token 14 gets the information from a CL communicating device, like an RFID tag, that is locally present and that stores information relating to the CL communicating device location where the user device/system has to be, so as to get access to a local CL service(s) (that is(are) associated with the considered location).

## Claims

1. A method (20) for accessing a contact-less service,
**characterized in that,** a device (14) accessing at least one contact-less application, the method comprises the following steps:
- the device determines (24) information relating to a location where the device is currently situated;
- the device retrieves at least one contact-less application (216) that is associated with the device location information and/or at least one contact-less application that is not associated with the device location information; and
- the device activates the at least one contact-less application that is associated with the device location information and/or the device deactivates the at least one contact-less application that is not associated with the device location information.

2. Method according to claim 1, wherein the method further comprises, after the contact-less application retrieval step and prior to the contact-less application activation step, a selection step in which, if at least two contact-less applications are not compatible with each other, then the device selects, amongst the at least two incompatible contact-less applications, only one contact-less application based upon at least one predefined criterion.

3. Method according to claim 1 or 2, wherein the method further comprises, after the contact-less application retrieval step and prior to the contact-less application activation step, a contact-less application deactivation step in which the device de-activates at least one contact-less application that is not associated with the device location information.

4. Method according to any of claims 1 to 3, wherein the location information determination step is based upon at least one of the following elements:
- a reception of Global Positioning System type location;
- a reception of LOCation Information;
- a reception of a roaming message;
- a reception of a message informing about a town or a region which the device enters into;
- a detection of a change of a radio-frequency network; and
- a detection of a presence of a local radio-frequency network.

5. Method according to any of claims 1 to 4, wherein the method further comprises a contact-less application downloading step in which the device retrieves from a remote server (18) a set (216) of at least one contact-less application that is associated with the device location information, the remote server being connected to the device.

6. Method according to claim 5, wherein the method further comprises the step in which the device sends to the remote server the device location information (26).

7. Method according to claim 5 or 6, wherein the method further comprises a user validation step in which a device user validates (212) a contact-less application downloading.

8. Method according to any of claims 1 to 7, wherein, after the contact-less application retrieval step and prior to the contact-less application activation step, the method further comprises a contact-less application configuration step in which the device configures automatically at least one contact-less application that is associated with the device location information and that is to be activated by defining at least one contact-less application feature.

9. A device (14) for accessing a contact-less service,
**characterized in that,** a device comprising means (142, 144, 146) for accessing at least one contact-less application, the device is adapted to:
- determine information relating to a location where the device is currently situated;
- retrieve at least one contact-less application that is associated with the device location information and/or at least one contact-less application that is not associated with the device location information; and
- activate the at least one contact-less application that is associated with the device location information and/or deactivate the at least one contact-less application that is not associated with the device location information.

10. A system for accessing a service,
**characterized in that,** the system comprising a device (12) and at least one secure element (14), the at least one secure element being coupled to the device, the device or at least one secure element comprising at least one contact-less application, one of the at least one secure element is adapted to:
- determine information relating to a location where the device is currently situated;
- retrieve at least one contact-less application that is associated with the device location information and/or at least one contact-less application that is not associated with the device location information; and
- activate the at least one contact-less application that is associated with the device location information and/or deactivate the at least one contact-less application that is not associated with the device location information.
